# EUROPEAN PATENT APPLICATION

(11) **EP 0 808 871 A1**
(43) Date of publication of application: **26.11.1997**
(21) Application number: 96941204.8
(22) Date of filing: 06.12.1996
(51) Int. Cl.: C08L 25/02, C08L 71/12

(54) **THERMOPLASTIC RESIN COMPOSITION**

(30) Priority: 08.12.1995 JP 345683/95
(71) Applicant: GE PLASTICS JAPAN LIMITED, Chuo-ku, Tokyo 103 (JP)
(72) Inventor: KOSAKA, Kazunari, 15-202, Sejuru, Shimotsuga-gun, Tochigi 321-02 (JP); SAKAI, Kenichi, Hasuda-shi, Saitama 349-01 (JP); HISHINUMA, Yukio, Haga-gun, Tochigi 321-36 (JP)
(74) Representative: Szary, Anne Catherine, Dr.
(86) International application number: JP9603594
(87) International publication number: WO9721771

(57) **Abstract**

Thermoplastic resin compositions are provided comprising polyphenylene ether resin, or said resin and polystyrene resin, in which laminar peeling and decreased adhesion to foamed urethane do not occur and which show outstanding impact resistance and chemical resistance.

The thermoplastic resin composition contains, with respect to 100 parts by weight of (A) polyphenylene ether resin or a resin composition consisting of polyphenylene ether and polystyrene resin, (B) 0.5-20 parts by weight of terpene resin, (C) 1-15 parts by weight of styrene elastomer, and (D) 0.5-10 parts by weight of an ethylene-unsaturated carboxylic acid ester copolymer having a number average molecular weight of 1,000-50,000.

## Description

The present invention relates to a thermoplastic resin composition containing polyphenylene ether resin or polyphenylene ether resin together with polystyrene resin, having improved fabrication properties, and showing outstanding adhesion to foamed urethane, chemical resistance, and no laminar peeling.

### BACKGROUND OF THE INVENTION

Polyphenylene ether resin is a thermoplastic resin showing outstanding mechanical properties, thermal resistance, electrical characteristics, dimensional stability, etc., which is used in a broad range of applications such as automobiles and electrical and electronic components.

In particular, internal components for automobiles (such as instrument panels) require a high degree of thermal resistance, and as such, resin compositions are frequently used in this type of application.

In many internal components for automobiles, such as instrument panels, foamed urethane is used as a covering material due to the properties of the product. However, such resin compositions composed of polyphenylene ether or polystyrene ordinarily do not adhere to foamed urethane.

In these products, the chemical resistance required during adhesion to foamed urethane also cannot be said to be sufficient, and immediate improvements are required. In order to improve adhesion properties, it has been proposed to mix in polar resins such as ABS and SMA (Japanese Unexamined Patent Application Nos.S60-36554, S63-118366).

However, such polar resins show poor compatibility with resin compositions composed of polyphenylene ether resin or polystyrene resin, and they have drawbacks such as the problem of laminar peeling during molding and decreased mechanical strength.

Moreover, in Japanese Unexamined Patent Application No.H2-199164, terpene phenol resin is added to a resin composition composed of polyphenylene ether resin or polystyrene resin in order to improve adhesion to foamed urethane, but as there is no improvement whatsoever in the chemical resistance of said resin composition, this method cannot be said to be sufficient.

Substances such as polyolefin resins, e.g., polyethylene and polypropylene, long-chain aliphatic esters and their metallic salts, liquid paraffin, and wax are ordinarily used in order to improve chemical resistance; however, when such substances are used, there is a decrease in adhesion to the foamed urethane, making this an undesirable solution.

The purpose of the present invention is to provide a resin composition composed of polyphenylene ether resin or polystyrene resin in which the aforementioned problems of laminar peeling and reduced adhesion to foamed urethane do not occur, and which has outstanding chemical resistance.

### SUMMARY OF THE INVENTION

The object of the present invention is a thermoplastic resin composition characterized by containing, with respect to (A) 100 parts by weight of a resin composition composed of polyphenylene ether and polystyrene resin, (B) 0.5-20 parts by weight of terpene resin, (C) 1-15 parts by weight of styrene elastomer, and (D) 0.5-10 parts by weight of an ethylene-unsaturated carboxylic acid ester copolymer having a number average molecular weight of 1,000-50,000. The following is a detailed explanation of the invention.

### DETAILED DESCRIPTION OF THE INVENTION

The polyphenylene ether resin used in the present invention is known in and of itself, and this generally refers to a polymer such as the one shown in the following general formula: 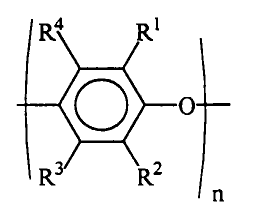 wherein in the formula, R¹, R², R³, and R⁴ are hydrogen, halogens, alkyl groups, alkoxy groups, or haloalkyl or haloalkoxy groups having at least two carbon atoms between the halogen atom and the phenyl ring and are monovalent substituents selected from among substances not containing tertiary α-carbon, and n is an integer integrating the degree of polymerization, and said resin may be one or a combination of two or more polymers having the aforementioned general formula.

In specific preferred examples, R¹ and R² are alkyl groups having 1-4 carbon atoms, and R³ and R⁴ are alkyl groups having 1-4 hydrogen or carbon atoms. Examples include poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether, and poly(2-ethyl-6-propyl-1,4-phenylene)ether.

A particularly preferred polyphenylene ether resin is poly(2,6-dimethyl-1,4-phenylene)ether. Moreover, examples of the polyphenylene ether copolymer include copolymers partially containing an alkyl-trisubstituted phenol in the aforementioned polyphenylene ether repeated unit, such as 2,3,6-trimethylphenol.

Furthermore, one may also use copolymers in which styrene compounds are grafted onto these polyphenylene ethers. Styrene compound-grafted polyphenylene ether is a copolymer obtained by graft polymerization of a styrene compound such as styrene, α-methylstyrene, vinyl toluene, or chlorostyrene onto the aforementioned polyphenylene ether.

The styrene resin which may be optionally used in the present invention is also known in and of itself, and it must be a substance in which repeated structural units derived from a vinyl aromatic compound having the following formula account for at least 25% of the polymer: 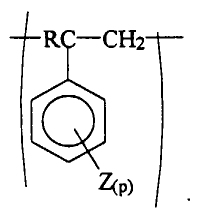 In the formula, R is hydrogen or an alkyl group having 1-4 carbon atoms, Z is halogen or a substituent having 1-4 carbon atoms, and p is an integer from 0 to 5.

Examples of such polystyrene resins include homopolymers of styrene or derivatives thereof, mixtures of natural or synthetic elastomers such as polybutadiene, polyisoprene, butyl rubber, EPDM rubber, ethylene-propylene copolymer, natural rubber, polysulfide rubber, polyurethane rubber, and epichlorohydrin, styrene polymers modified by interactions, and styrene-containing copolymers such as styrene-acrylonitrile copolymer, styrene-butadiene copolymer, styrene-maleic anhydride copolymer, styrene-acrylonitrile-butadiene terpolymer, poly-α-methylstyrene, and copolymers of ethylvinyl benzene and divinyl benzene, etc.

Moreover, examples of preferred resins in the present invention include polystyrene homopolymer, mixtures containing 3-30% by weight, and preferably 4-12% by weight, of polybutadiene rubber or EPDM rubber, or rubber-modified polystyrene grafted with such mixtures.

The blending ratio of the styrene resin with respect to the polyphenylene ether should preferably be within a range which does not adversely affect the outstanding properties of the polyphenylene ether resin, and accordingly, a ratio of 20-80% by weight of the polyphenylene ether and 80-20% by weight of the styrene resin is preferred.

The styrene elastomer used in the present invention is also known in and of itself, and it may be a block copolymer composed of central blocks of a diene rubber such as polybutadiene and polyvinyl aromatic hydrocarbon terminal blocks such as polystyrene, or a vinyl aromatic hydrocarbon polymer composed of styrene elastomer terminal blocks which are hydrogenates of said block copolymer, such as styrene, α-methylstyrene, vinyl styrene, vinyl xylene, ethylvinyl xylene, and vinyl naphthalene or mixtures thereof, and the terminal blocks of the polymer may be either the same or different.

The central blocks are rubber polymers composed of substances such as butadiene, propylene, isoprene, 1,3-pentadiene, 2,3-dimethylbutadiene, or a mixture thereof.

Moreover, the block copolymer may have either a linear-order or teleradial structure.

Moreover, substances in which hydrogenation is carried out until at least 80%, and preferably 90% or more of the aliphatic double bonds of the aforementioned styrene elastomer are saturated bonds may also be used as the styrene elastomer.

The component ratios and average molecular weights of these block copolymers may vary within a broad range, but the molecular weight of the central blocks should be greater than the total molecular weight of the terminal blocks.

For example, it is desirable to form a block copolymer composed of terminal blocks having an average molecular weight of approximately 4,000-150,000 and central blocks having an average molecular weight of approximately 20,000-450,000.

It is even more preferable if the terminal blocks have an average molecular weight of approximately 8,000-60,000 and the central blocks have an average molecular weight of approximately 50,000-300,000.

The terminal blocks should preferably account for 2-33% by weight of the block copolymer as a whole, with a figure of 5-30% by weight being even more preferable.

A preferred copolymer is composed of a polymer which has polybutadiene central blocks and in which 35-55%, or preferably 40-50%, of the butadiene carbon atoms are vinyl side chains.

A particularly preferred styrene elastomer in the present invention is a styrene thermoplastic elastomer or hydrogenate thereof in which the terminal blocks are homostyrene and the central blocks are polybutadiene.

Particularly preferred copolymers are hydrogenated A-B-A block copolymers, hydrogenated A-B block copolymers, unsaturated A-B-A block copolymers, and unsaturated A-B block copolymers.

The terpene resin used in the present invention is a resin containing terpene monomer alone or a resin obtained by copolymerization with phenols, vinyl aromatic monomers, etc., with examples including terpene resin, terpene phenol resin, vinyl aromatic modified terpene resin, or hydrogenated terpene resins in which these substances are hydrogenated.

Examples of terpene monomers include α-pinene and β-pinene, and examples of phenols include phenol and cresol. Moreover, examples of vinyl aromatic monomers include styrene, α-methylstyrene, vinyl toluene, and chlorostyrene. There are no particular restrictions on the hydrogenation ratio.

The blending amount of the terpene resin used in the present invention should preferably be 0.5-20% by weight with respect to 100 parts by weight of a resin composition composed of polyphenylene ether resin or polystyrene resin, with an amount of 5-15% by weight being preferred. If the amount is less than 0.5% by weight, adhesion to the foamed urethane will be insufficient, and if it exceeds 20% by weight, mechanical properties will decrease, producing an undesirable result.

The ethylene-unsaturated carboxylic acid ester copolymer used in the present invention is an ester of acrylate, and preferably acrylic acid, and alcohol having 1-4 carbon atoms.

Specific examples of the unsaturated ester carboxylic acid component include acrylic acid esters such as ethyl acrylate, methyl acrylate, 2-ethylhexyl acrylate, and stearyl acrylate.

There are no particular restrictions on the weight ratio of the ethylene and acrylate, but it should be in the range of 10 : 1-1 : 10, with a range of 5 : 1-1 : 5 being even more preferable.

The preferred unsaturated carboxylic acid ester copolymer used in the present invention is an ethylene-ethylacrylate copolymer. Its number average molecular weight is in the range of 1,000-50,000. If the number average molecular weight is greater than 50,000, fluidity will decrease, and on the other hand, if it is less than 1,000, mechanical properties will decrease, producing an undesirable result.

In order to improve the adhesion to foamed urethane of the aforementioned ethylene-unsaturated carboxylic acid ester copolymer, it should preferably be graft copolymer-modified with unsaturated dicarboxylic acid or a derivative thereof.

The graft monomers which are graft-polymerized onto the aforementioned ethylene-unsaturated dicarboxylic acid ester copolymer are one or two or more compounds selected from unsaturated dicarboxylic acid or derivatives thereof.

Examples of the unsaturated dicarboxylic acid or derivative thereof include unsaturated dicarboxylic acids such as maleic acid, tetrahydrophthalic acid, itaconic acid, citraconic acid, crotonic acid, isocrotonic acid, and nadicic acid, or derivatives thereof such as acid halides, amides, imides, anhydrides; and esters.

Specific examples of such derivatives include malonyl chloride, maleimide, maleic anhydride, citraconic anhydride, monomethyl maleate, and dimethyl maleate. Among these substances, anhydrides are preferred, with maleic anhydride and nadicic anhydride being particularly preferred.

There are no particular restrictions on the graft ratio of the graft monomer, but it should preferably be within the range of 0.05-10 parts by weight with respect to 100 parts by weight of the aforementioned ethylene-unsaturated carboxylic acid ester copolymer.

The higher the graft ratio, the more the adhesion to foamed urethane will improve, which is a desirable result, but if it exceeds 10 parts by weight, this has the undesirable effect of increasing the degree of cross-linking of the graft-modified substance, thus decreasing mechanical strength.

This modified ethylene-unsaturated carboxylic acid ester copolymer should preferably be prepared by directly melting ethylene-α-olefin copolymer or dissolving it in a solvent and then adding a radical initiator or the aforementioned graft monomer in order to carry out a grafting reaction.

A device such as a reactor, extruder, or kneader may be used in the grafting reaction. Examples of radical initiators include organic peroxides and organic peresters such as benzoyl peroxide, dichlorobenzoyl peroxide, dicumyl peroxide, di-tert-butyl peroxide, 2,5-dimethyl-2,5-di(peroxybenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy)hexyne-3, 2,5-dimethyl-2,5-di(tert-butylperoxy)hexane, tert-butylperbenzoate, tert-butylperphenylacetate, tert-butylperisobutylate, tert-butylper-sec-octoate, tert-butylperpivalate, cumylperpivalate, and tert-butylperdiethyl acetate, as well as other azo compounds such as azobisisobutyronitrile and dimethyl azoisobutyrate.

Among these substances, dialkyl peroxides such as dicumyl peroxide, di-tert-butyl peroxide, 2,5-dimethyl-2,5-di(tert-butylperoxy)hexyne-3, 2,5-dimethyl-2,5-di(tert-peroxy)hexane, and 1,4-bis(tert-butylperoxyisopropyl) are preferred.

In the resin composition of the present invention, concerning the blending ratio of the ethylene-unsaturated carboxylic acid ester copolymer, 0.5-10 parts by weight should preferably be added to 100 parts by weight of the resin composition composed of polyphenylene ether resin or polystyrene resin.

If this amount is 0.5% by weight or less, chemical resistance will be insufficient, and on the other hand, if it exceeds 10 parts by weight, problems with fabrication such as laminar peeling will occur, producing an undesirable result.

There are no particular restrictions on the blending ratio of the styrene elastomer and ethylene- unsaturated carboxylic acid ester copolymer, but the two substances should preferably be used together.

If the ethylene-unsaturated carboxylic acid ester copolymer is added without adding styrene elastomer, impact resistance will not be markedly improved.

Moreover, the resin composition of the present invention may also contain reinforcing agents, including fiber-reinforcing agents such as glass fibers or carbon fibers and particulate or amorphous reinforcing agents such as talc, mica, wollastonite, clay, or glass beads.

Concerning the blending ratio of the aforementioned reinforcing agents, they should be added in an amount of 100 parts by weight or less with respect to 100 parts by weight of the aforementioned resin composition. If this amount exceeds 100 parts by weight, on the other hand, fabrication properties will decrease, producing an undesirable result.

Furthermore, other additives, such as pigments, dyes, fillers, antioxidants, lubricants, mold-releasing agents, plasticizers, flame retardants, fluidity-improving agents, and antistatic agents may be included, provided these do not adversely affect the physical properties of the composition.

There are no particular restrictions on the method used to manufacture the resin composition of the present invention, and any common method may be used. Among such methods, melt mixing is preferred. For example, manufacturing may be carried out using a kneading extruder, Banbury mixer, roller, kneader, etc.

### EXAMPLES

The following is an explanation of the invention by means of practical examples. The polyphenylene ether resin used in the practical examples is a poly(2,6-dimethyl-1,4-phenylene)ether having an intrinsic viscosity of 46 dl/g at 30°C in chloroform.

A rubber-modified polystyrene manufactured by Mitsubishi Monsanto K.K., HT-644 (commercial name), was used as the styrene resin.

An SEBS manufactured by Shell Chemical Co., Karton G-1651 (commercial name), was used as the styrene elastomer.

An ethylene-ethylacrylate copolymer (A) having a number average molecular weight of 7,500 and a substance produced by grafting of maleic anhydride (1.2 g/100 g) onto ethylene-ethylacrylate copolymer (ethylacrylate 30% by weight) (B) (melt flow 1.4 g/10 min.) were used as the ethylene-unsaturated carboxylic acid ester copolymers.

A dipentene-phenol copolymer having an average molecular weight of 700, a softening point of 150°C, and 1.7 hydroxyl groups per molecule was used as the terpene resin.

Concerning the manufacturing method, the resin composition was produced by blending as shown in Table 1. Specifically, the various components were first dispersed and mixed in a Henschel mixer, and this mixture was melt-kneaded in a 50 mm biaxial screw extruder set to a cylinder temperature of 280°C and a screw revolution speed of 280 rpm to make pellets. The pellets obtained were subjected to preliminary drying for two hours at 80°C, and the desired test pieces were obtained using an injection molding machine set to a cylinder temperature of 280°C and a metal mold temperature of 60°C. The following items were evaluated using the test pieces obtained.

**Table 1**

| Composition ratios and test results for practical examples and comparison examples | | | | | | | | | | | | |
|---|---|---|---|---|---|---|---|---|---|---|---|---|
| | Practical example | | | | | | Comparison example | | | | | |
| | 1 | 2 | 3 | 4 | 5 | 6 | 1 | 2 | 3 | 4 | 5 | 6 |
| PPE | 40 | 40 | 40 | 40 | 40 | 40 | 40 | 40 | 40 | 40 | 40 | 40 |
| Styrene resin | 60 | 60 | 60 | 60 | 60 | 60 | 60 | 60 | 60 | 60 | 60 | 60 |
| Styrene elastomer | 5 | 5 | 7 | 7 | 5 | 5 | ― | 20 | 7 | 7 | 7 | 7 |
| Terpene resin | 7 | 7 | 7 | 7 | 7 | 7 | 7 | 7 | 7 | 7 | ― | ― |
| Component A | 2 | 4 | 2 | 4 | ― | ― | 2 | 2 | ― | 20 | 4 | ― |
| Component B | ― | ― | ― | ― | 2 | 4 | ― | ― | ― | ― | ― | ― |
| Izod impact strength kg cm/cm | 16 | 18 | 21 | 25 | 17 | 20 | 10 | 45 | 20 | 12 | 20 | 20 |
| Laminar peeling | No | No | No | No | No | No | No | Yes | No | Yes | No | No |
| Adhesion to urethane | 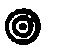 | 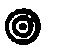 | 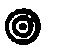 | 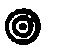 | 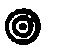 | 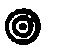 | O | 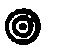 | O | O | x | x |
| Chemical resistance | O | O | O | O | 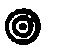 | 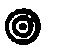 | x | △ | △ | 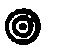 | △ | x |

### Izod impact strength

Notched impact strength was measured according to ASTM D-256 using a 1/8-inch-thick test piece.

### Adhesion to foamed urethane

The composition shown in Table 2 below was used as raw material urethane for foam molding.

**Table 2**

| Composition table of raw material foamed urethane | |
|---|---|
| | Weight ratio of mixture |
| Polyether | 73 |
| Triethanolamine | 3.8 |
| Water | 1.9 |
| Triethylamine | 0.78 |
| Crude MDI | 48.1 |

Molded plates measuring 150 x 150 x 3 mm produced by injection molding of the resin compositions in the various practical examples and comparison examples were placed in a mold, the aforementioned raw material urethane was injected into the mold on top of the plates, and foam-hardening was carried out for 5 min. at 40°C. The thickness of the foamed urethane layer was approximately 20 mm, and the foam density was 0.13 g/cm².

Test pieces 25 mm in width x 150 mm in thickness were cut from the foamed urethane adhering on top of the molded plates obtained in this manner. After this, the resin plate and the foamed urethane layer were partially peeled at the edge in a lengthwise direction. With the urethane layer on the bottom, said layer was grasped in the left hand, the other end of the test piece was grasped in the right hand, and it was then bent upward. The peeling status of the resin plate and the foamed urethane layer was then visually observed. The evaluation criteria are shown below.
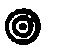 : Cohesive failure of the foamed urethane layer occurred, and the fracture surface then did not peel when scratched with the fingernail.
0 : Cohesive failure of the foamed urethane layer occurred, and the fracture surface then peeled when scratched with the fingernail.
△ : Peeling occurred at the interface between the foamed urethane and the resin plate.
x : Complete peeling of the entire surface occurred at the interface between the foamed urethane and the resin plate.

### Laminar peeling

A test piece measuring 1/16 inch in thickness was bent, and laminar peeling status was then visually evaluated.

### Chemical resistance

A test piece 1/8 inch in thickness was deformed by 1% using a forced bending jig, an environmental agent (Freerees FR-225 (commercial name) manufactured by Neos K.K.) was then applied, and the status of the test piece was observed after 72 hours at 23°C.
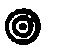 : Test piece showed no changes other than whitening.
0 : Fine cracks (crazing) were observed when the test piece was bent.
△ : Fine cracks (crazing) were observed even when the test piece was not bent.
x : Not only did crazing occur, but the test piece ruptured completely.

The test results for the various items in the practical examples and comparison examples are shown in Table 1 above.

As mentioned above, and as clearly shown at the various blending ratios in the practical examples, the present invention makes it possible to obtain a thermoplastic resin composition composed of polyphenylene ether resin, or said resin and polystyrene resin, in which laminar peeling and decreased adhesion to foamed urethane do not occur and which shows outstanding impact resistance and chemical resistance.

## Claims

1. Thermoplastic resin composition, characterized by containing, with respect to 100 parts by weight of (A) polyphenylene ether resin or a resin composition consisting of polyphenylene ether and polystyrene resin, (B) 0.5-20 parts by weight of terpene resin, (C) 1-15 parts by weight of styrene elastomer, and (D) 0.5-10 parts by weight of an ethylene-unsaturated carboxylic acid ester copolymer having a number average molecular weight of 1,000-50,000.

2. Thermoplastic resin composition according to Claim 1, characterized in that all or a part of the ethylene-unsaturated carboxylic acid ester copolymer is modified with unsaturated dicarboxylic acid or a derivative thereof.
